# EUROPEAN PATENT APPLICATION

(11) **EP 4 808 144 A1**
(43) Date of publication of application: **16.09.2026**
(21) Application number: 24888397.7
(22) Date of filing: 17.09.2024
(51) Int. Cl.: H04N 25/77, H04N 25/59, H04N 25/771

(54) **IMAGING DEVICE**

(30) Priority: 06.11.2023 JP 2023189109
(71) Applicant: Sony Semiconductor Solutions Corporation, Atsugi-shi, Kanagawa 243-0014 (JP)
(72) Inventor: YAMANAKA, Takaya, Atsugi-shi, Kanagawa 243-0014 (JP); SAKANO, Yorito, Atsugi-shi, Kanagawa 243-0014 (JP)
(74) Representative: Müller Hoffmann & Partner
(86) International application number: PCT/JP2024/033079
(87) International publication number: WO 2025/100097

(57) **Abstract**

To enable pulse drive of a capacitor provided in a pixel while suppressing a decrease in a frame rate.

An imaging apparatus includes: a photoelectric conversion section; a transfer transistor connected to the photoelectric conversion section; a reset transistor including one terminal connected to the transfer transistor and the other terminal connected to a power supply voltage; a capacitor including one terminal connected to the photoelectric conversion section and the other terminal connected to a control voltage; a voltage control line that transmits the control voltage; and a control line that transmits a transfer signal to the transfer transistor, in which the voltage control line is orthogonal to the control line. A signal line that transmits a signal read from the photoelectric conversion section may be further included, and the voltage control line may be parallel to the signal line.

## Description

### TECHNICAL FIELD

The present technology relates to an imaging apparatus. Specifically, the present technology relates to an imaging apparatus in which a capacitor is provided in a pixel.

### BACKGROUND ART

In order to expand a dynamic range of imaging, a capacitor that accumulates electric charges overflowing from a photodiode may be provided in a pixel. For example, an imaging apparatus provided with a first switch that connects a first light receiving element and a first charge accumulation section and a second switch that connects a second light receiving element and a second charge accumulation section has been proposed (see, for example, Patent Document 1).

### CITATION LIST

### PATENT DOCUMENT

Patent Document 1: WO 2019/82614 A

### SUMMARY OF THE INVENTION

### PROBLEMS TO BE SOLVED BY THE INVENTION

However, in the above-described conventional technique, in order to reduce the dark current of the capacitor, when a capacitor electrode is pulse-driven, a load capacitance viewed from a voltage control line used for pulse drive increases. For this reason, the settling time at the time of shutter and at the time of reading of the pixel is increased, and there is a possibility that the frame rate is lowered.

The present technology has been made in view of such a situation, and an object thereof is to enable pulse drive of a capacitor provided in a pixel while suppressing a decrease in a frame rate.

### SOLUTIONS TO PROBLEMS

The present technology has been made to solve the above-described problem, and a first aspect thereof is an imaging apparatus including: a photoelectric conversion section; a transfer transistor connected to the photoelectric conversion section; a reset transistor including one terminal connected to the transfer transistor and the other terminal connected to a power supply voltage; a capacitor including one terminal connected to the photoelectric conversion section and the other terminal connected to a control voltage; a voltage control line that transmits the control voltage; and a control line that transmits a transfer signal to the transfer transistor, in which the voltage control line is orthogonal to the control line. This brings about an effect that a capacitive load of an unselected row connected to the voltage control line becomes invisible from a selected row.

Furthermore, in the first aspect, a signal line that transmits a signal read from the photoelectric conversion section may be further included, and the voltage control line may be parallel to the signal line. This brings about an effect that the control line and the voltage control line are orthogonal to the signal line.

Furthermore, in the first aspect, a floating diffusion connected between the reset transistor and the transfer transistor may be further included. This brings about an effect that a signal is read on the basis of electric charges transferred from the photoelectric conversion section to the floating diffusion.

Furthermore, in the first aspect, a first layer in which the control line is formed; a second layer in which the voltage control line is formed; and a power supply line formed in an intermediate layer between the first layer and the second layer may be further included. This brings about an effect that the control line and the voltage control line are shielded via the power supply line.

Furthermore, in the first aspect, the capacitor may include a plurality of capacitors connected to voltage control lines different from each other. This brings about an effect that electric charges overflowing from the photoelectric conversion section are read out.

Furthermore, in the first aspect, the capacitor may have a three-dimensional metal insulation metal (MIM) structure. This brings about an effect that the capacitance of the capacitor is increased without increasing the planar size of the capacitor.

Furthermore, in the first aspect, the photoelectric conversion section may include a plurality of photoelectric conversion sections having sensitivities different from each other and connected to transfer transistors different from each other. This brings about an effect of expanding the dynamic range of imaging.

Furthermore, in the first aspect, the photoelectric conversion section may include: a first photoelectric conversion section; and a second photoelectric conversion section having lower sensitivity than the first photoelectric conversion section, and the capacitor may accumulate an electric charge overflowing from the second photoelectric conversion section. This brings about an effect of expanding the dynamic range of imaging.

Furthermore, in the first aspect, a pixel array section in which pixels each provided with the photoelectric conversion section, the transfer transistor, the reset transistor, and the capacitor are arranged in a matrix in a row direction and a column direction may be included, the control line may be wired in the row direction, and the voltage control line may be wired in the column direction. This brings about an effect of reducing a dark current of the capacitor while reducing a capacitive load applied to a selected row.

Furthermore, in the first aspect, a drive circuit that drives the voltage control line for each column may be further included. This brings about an effect that the load of the drive circuit is distributed for each of columns.

Furthermore, in the first aspect, the drive circuit may pulse-drive the voltage control line for each of the columns at the same timing. This brings about an effect that the potential of the voltage control line is controlled.

Furthermore, in the first aspect, the drive circuit may set a potential of the voltage control line to a high level during a shutter period and a read period of the pixels, and set the potential of the voltage control line to a low level during an accumulation period of the pixels. This brings about an effect that a capacitive load of an unselected row becomes invisible from a selected row in the shutter period and the read period.

### BRIEF DESCRIPTION OF DRAWINGS

Fig. 1 is a block diagram illustrating a configuration example of an imaging apparatus according to a first embodiment.
Fig. 2 is a block diagram illustrating a configuration example of a solid-state imaging apparatus according to the first embodiment.
Fig. 3 is a diagram illustrating a circuit configuration example of a pixel provided in the solid-state imaging apparatus according to the first embodiment.
Fig. 4 is a timing chart illustrating an example of a relationship between a read operation and a shutter operation of the solid-state imaging apparatus according to the first embodiment.
Fig. 5 is a timing chart illustrating an example of waveforms of respective sections in the read operation, the shutter operation, and an accumulation operation of the solid-state imaging apparatus according to the first embodiment.
Fig. 6 is a cross-sectional view illustrating a configuration example of a capacitor applied to a solid-state imaging apparatus according to a second embodiment.
Fig. 7 is a cross-sectional view illustrating a configuration example of wiring applied to a solid-state imaging apparatus according to a third embodiment.
Fig. 8 is a block diagram illustrating a configuration example of a solid-state imaging apparatus according to a fourth embodiment.
Fig. 9 is a diagram illustrating a circuit configuration example of a pixel provided in the solid-state imaging apparatus according to the fourth embodiment.
Fig. 10 is a timing chart illustrating an example of waveforms of respective sections in a read operation, a shutter operation, and an accumulation operation of the solid-state imaging apparatus according to the fourth embodiment.
Fig. 11 is a diagram illustrating a circuit configuration example of a pixel provided in a solid-state imaging apparatus according to a fifth embodiment.
Fig. 12 is a timing chart illustrating an example of waveforms of respective sections in a read operation, a shutter operation, and an accumulation operation of the solid-state imaging apparatus according to the fifth embodiment.
Fig. 13 is a diagram illustrating a circuit configuration example of a pixel provided in a solid-state imaging apparatus according to a sixth embodiment.
Fig. 14 is a timing chart illustrating an example of waveforms of respective sections in a read operation, a shutter operation, and an accumulation operation of the solid-state imaging apparatus according to the sixth embodiment.
Fig. 15 is a perspective view illustrating a stacking example of pixel array sections according to a seventh embodiment.
Fig. 16 is a block diagram illustrating a schematic configuration example of a vehicle control system.
Fig. 17 is an explanatory diagram illustrating an example of an installation position of an imaging section.

### MODE FOR CARRYING OUT THE INVENTION

Modes for carrying out the present technology (hereinafter, referred to as embodiments) will be described below. The description will be given in the following order.
1. First Embodiment (Example in which a voltage control line that transmits a control voltage of a capacitor provided in a pixel and a horizontal drive line that drives each pixel for each row are orthogonal to each other)
2. Second Embodiment (Example in which a capacitor provided in a pixel has three-dimensional metal insulation metal (MIM) configuration)
3. Third Embodiment (Example in which a horizontal drive line that drives each pixel for each row is formed in a first layer, a voltage control line that transmits a control voltage of a capacitor provided in a pixel is formed in a second layer, and a power supply line formed in an intermediate layer between the first layer and the second layer is formed.)
4. Fourth Embodiment (Example in which a plurality of voltage control lines that transmits control voltages of a plurality of capacitors provided in a pixel and a horizontal drive line that drives each pixel for each row are orthogonal to each other)
5. Fifth Embodiment (Example in which a plurality of photoelectric conversion sections having sensitivities different from each other is provided in a pixel)
6. Sixth Embodiment (Example in which transfer transistors different from each other are connected to a plurality of photoelectric conversion sections having sensitivities different from each other)
7. Seventh Embodiment (Example in which pixel array sections are stacked)
8. Application Example to Mobile Body

### <1. First Embodiment>

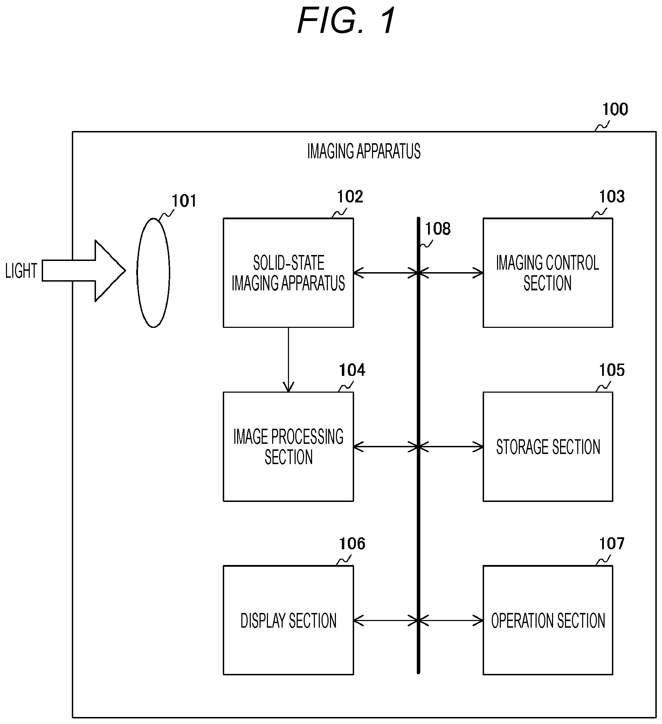

Fig. 1 is a diagram illustrating a configuration example of an imaging apparatus according to a first embodiment.

In the drawing, an imaging apparatus 100 includes an optical system 101, a solid-state imaging apparatus 102, an imaging control section 103, an image processing section 104, a storage section 105, a display section 106, and an operation section 107. The imaging control section 103, the image processing section 104, the storage section 105, the display section 106, and the operation section 107 are interconnected via a bus 108. Note that the imaging apparatus 100 may be used alone, may be incorporated in a mobile terminal such as a smartphone, may be incorporated in an authentication device or a monitoring device, or may be incorporated in a vehicle or a drone.

The optical system 101 causes light from a subject to enter the solid-state imaging apparatus 102, and forms an optical image on a light-receiving surface of the solid-state imaging apparatus 102. The optical system 101 can include, for example, a focus lens, a zoom lens, a diaphragm, and the like. The optical system 101 may include a plurality of lenses such as a wide-angle lens, a standard lens, and a telephoto lens.

The solid-state imaging apparatus 102 converts the optical image formed on the light-receiving surface into an electric signal for each pixel, and digitizes and outputs the electric signal. The solid-state imaging apparatus 102 is, for example, a complementary metal oxide semiconductor (CMOS) image sensor. The CMOS image sensor may be a back-irradiation image sensor or a front-irradiation image sensor. The solid-state imaging apparatus 102 may be a lateral overflow integration capacitor (LOFIC) type image sensor.

The imaging control section 103 controls the imaging by the solid-state imaging apparatus 102 on the basis of a command from the operation section 107. At this time, the imaging control section 103 can control the exposure time, the exposure amount, the imaging timing, and the like of the solid-state imaging apparatus 102.

The image processing section 104 performs image processing on the basis of the output from the solid-state imaging apparatus 102. Examples of the image processing include gamma correction, white balance processing, sharpness processing, or gradation conversion processing. The image processing section 104 may include a processor that executes processing on the basis of software.

The storage section 105 stores a captured image captured by the solid-state imaging apparatus 102, and stores imaging parameters and the like of the solid-state imaging apparatus 102. Furthermore, the storage section 105 can store a program for operating the imaging apparatus 100 on the basis of software. The storage section 105 may include a read only memory (ROM), a random access memory (RAM), and a memory card.

The display section 106 displays the captured image and displays various types of information supporting the imaging operation. The display section 106 may be a liquid crystal display or an organic electro luminescence (EL) display.

The operation section 107 provides a user interface for operating the imaging apparatus 100. The operation section 107 may include, for example, a button, a dial, and a switch provided in the imaging apparatus 100. The operation section 107 may be implemented as a touch panel together with the display section 106.

Note that, depending on the form of the imaging apparatus 100, some of the above-described functions may be omitted, or conversely, functions that are not disclosed may be further included.

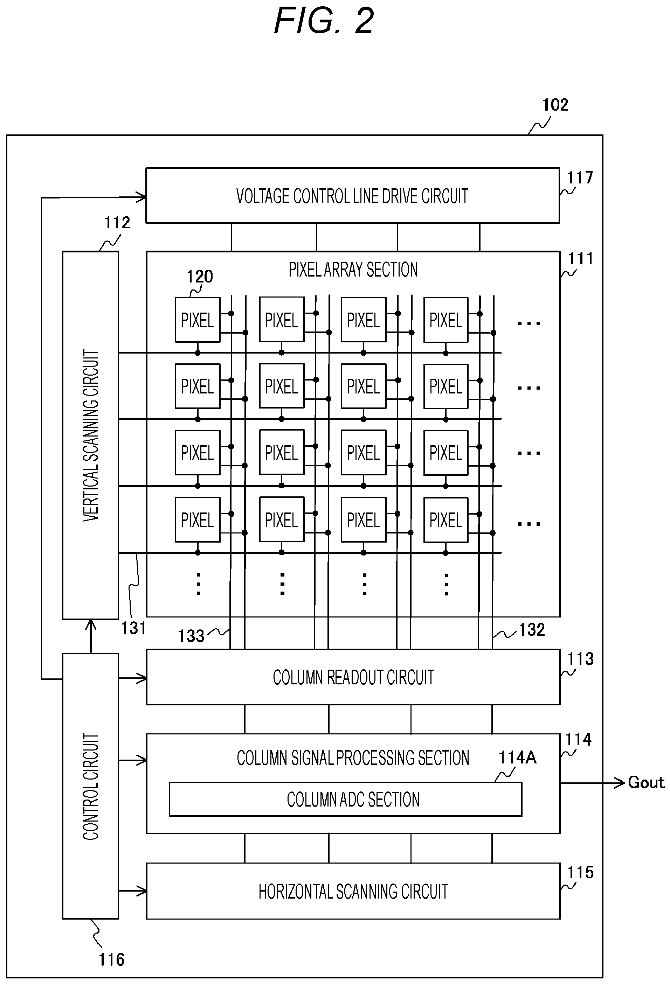

Fig. 2 is a block diagram illustrating a configuration example of the solid-state imaging apparatus according to the first embodiment.

In the drawing, the solid-state imaging apparatus 102 includes a pixel array section 111, a vertical scanning circuit 112, a column readout circuit 113, a column signal processing section 114, a horizontal scanning circuit 115, a control circuit 116, and a voltage control line drive circuit 117.

The pixel array section 111 includes a plurality of pixels 120. The pixels 120 are arranged in a matrix along a row direction (also referred to as a horizontal direction) and a column direction (also referred to as a vertical direction). Each of the pixels 120 includes a capacitor that accumulates electric charges overflowing from a photodiode. This capacitor may be a lateral overflow integration capacitor. Each pixel 120 may include a plurality of photodiodes having sensitivities different from each other. Furthermore, each pixel 120 can form a source follower with the column readout circuit 113 at the time of signal readout.

Each pixel 120 is connected to a horizontal drive line 131 for each row, and is connected to a vertical signal line 132 and a voltage control line 133 for each column. When reading a signal from each pixel 120, the horizontal drive line 131 drives the pixels 120 for each row. The vertical signal line 132 transmits potentials based on currents flowing at the time of signal reading from the pixels 120 to the column signal processing section 114 for each column. The voltage control line 133 transmits a control voltage applied to a capacitor provided in each pixel 120. The voltage control line 133 is orthogonal to the horizontal drive line 131. At this time, the voltage control line 133 can be parallel to the vertical signal line 132.

Each pixel 120 may be a single pixel, may share four pixels, or may share eight pixels. Furthermore, the pixels 120 may form a Bayer array or a quad-Bayer array. The light received by each pixel 120 may be visible light, near infrared light (NIR), short wavelength infrared light (SWIR), ultraviolet light, X-rays, or the like. Note that the horizontal drive line 131 is an example of a control line recited in the claims. The vertical signal line 132 is an example of a signal line recited in the claims.

The vertical scanning circuit 112 scans the pixels 120 to be read in the column direction. The vertical scanning circuit 112 may be configured using a vertical register. The vertical scanning circuit 112 may include a decoder that designates the pixel 120 to be read.

The column readout circuit 113 can form a source follower with each pixel 120 at the time of reading a signal from each pixel 120. At this time, the column readout circuit 113 can change the potential of the vertical signal line 132 on the basis of the electric charges held in the pixel 120.

The column signal processing section 114 processes a signal transmitted from each pixel 120 in the column direction. For example, the column signal processing section 114 can perform correlated double sampling (CDS) processing on the basis of the signal transmitted from each pixel 120 in the column direction. Furthermore, the column signal processing section 114 can perform analog to digital (AD) conversion processing on the basis of the signal transmitted from each pixel 120 in the column direction to output an imaging signal Gout.

The column signal processing section 114 includes a column ADC section 114A. The column ADC section 114A can perform AD conversion processing in parallel for each column. At this time, the column ADC section 114A can perform AD conversion for each column on the basis of a comparison result between a pixel signal read from the pixel 120 and a reference signal.

The horizontal scanning circuit 115 scans the pixels 120 to be read in the row direction. The horizontal scanning circuit 115 may be configured using a horizontal register.

The voltage control line drive circuit 117 drives the voltage control line 133 for each column. At this time, the voltage control line drive circuit 117 can pulse-drive the voltage control line 133 for each column at the same timing. For example, the voltage control line drive circuit 117 can set the potential of the voltage control line 133 to a high level during a shutter period and a read period of the pixel 120, and set the potential of the voltage control line 133 to a low level during an accumulation period of the pixel 120. Note that, in the potential of the voltage control line 133, the low level is a potential lower than the high level, and for example, the high level may be 3.3 V and the low level may be 2.4 V in combination. Furthermore, the voltage control line drive circuit 117 is an example of a drive circuit recited in the claims.

The control circuit 116 controls the vertical scanning circuit 112, the column readout circuit 113, the column signal processing section 114, the horizontal scanning circuit 115, and the voltage control line drive circuit 117. For example, the control circuit 116 can control the scanning timing in the column direction, the scanning timing in the row direction, the operation timing of the column readout circuit 113, and the processing timing of the column signal processing section 114. Furthermore, the control circuit 116 can control the drive timing of the voltage control line drive circuit 117. At this time, the control circuit 116 can cause the vertical scanning circuit 112, the column readout circuit 113, the column signal processing section 114, the horizontal scanning circuit 115, and the voltage control line drive circuit 117 to cooperate so that the accumulation operation, the shutter operation, and the read operation are performed for each row in each frame.

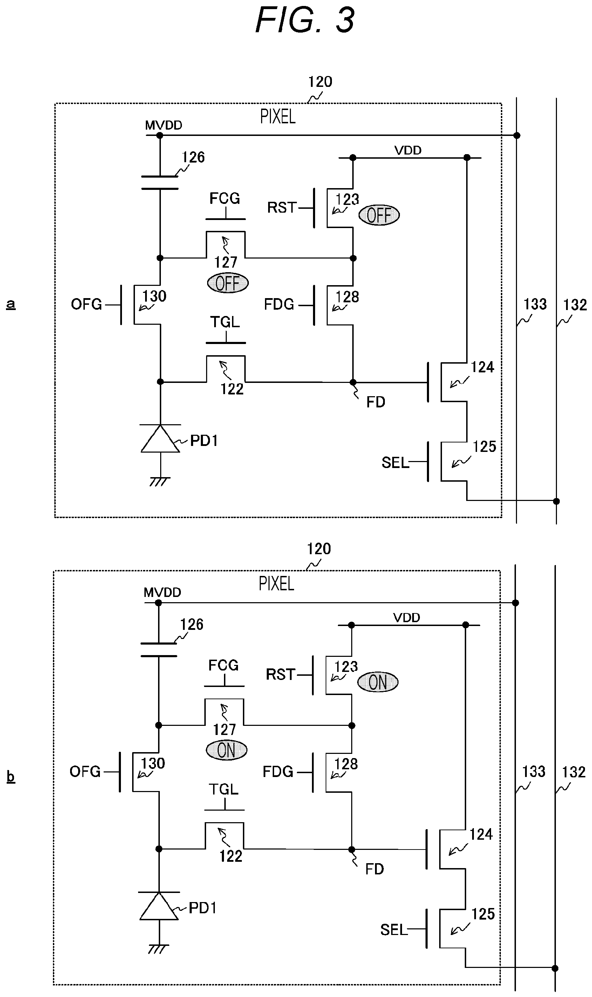

Fig. 3 is a diagram illustrating a circuit configuration example of a pixel provided in the solid-state imaging apparatus according to the first embodiment. Note that a in the drawing illustrates a state of an unselected row, and b in the drawing illustrates states of a shutter row and a read row.

In the drawing, the pixel 120 includes a photodiode PD1, a transfer transistor 122, a reset transistor 123, an amplification transistor 124, a selection transistor 125, and a floating diffusion FD. Moreover, the pixel 120 includes a capacitor 126, a pass transistor 127, a switching transistor 128, and an overflow control transistor 130. The transfer transistor 122, the reset transistor 123, the amplification transistor 124, the selection transistor 125, the pass transistor 127, the switching transistor 128, and the overflow control transistor 130 may be metal oxide semiconductor (MOS) transistors. The capacitor 126 can use a metal insulation metal (MIM) capacitor. The capacitor 126 may be a three-dimensional MIM capacitor.

The photodiode PD1 performs photoelectric conversion and accumulates photoelectrically converted electric charges. The capacitor 126 accumulates electric charges overflowing from the photodiode PD1. The capacitor 126 may be shielded from light. One end of the capacitor 126 is connected to a control voltage MVDD, and the other end of the capacitor 126 is connected to a cathode of the photodiode PD1 via the overflow control transistor 130. The capacitor 126 may be a high dielectric capacitor.

The transfer transistor 122 transfers the electric charges accumulated in the photodiode PD1 to the floating diffusion FD. The reset transistor 123 resets the floating diffusion FD. The amplification transistor 124 outputs a signal according to the potential of the floating diffusion FD. The selection transistor 125 selects the output of the amplification transistor 124. The pass transistor 127 sets a path through which the electric charges accumulated in the capacitor 126 are transferred to the floating diffusion FD. The switching transistor 128 switches the conversion efficiency in the amplification transistor 124. The overflow control transistor 130 controls overflow of the electric charges from the photodiode PD1 to the capacitor 126.

The transfer transistor 122 is connected between the cathode of the photodiode PD1 and the floating diffusion FD. The amplification transistor 124 and the selection transistor 125 are connected in series. The drain of the amplification transistor 124 is connected to a power supply voltage VDD. The gate of the amplification transistor 124 is connected to the floating diffusion FD. The source of the selection transistor 125 is connected to the vertical signal line 132.

The pass transistor 127 is connected between a connection point between the overflow control transistor 130 and the capacitor 126 and a connection point between the reset transistor 123 and the switching transistor 128. The switching transistor 128 is connected between the reset transistor 123 and the floating diffusion FD. The reset transistor 123 is connected between the switching transistor 128 and the power supply voltage VDD. At this time, the reset transistor 123 and the switching transistor 128 are connected in series. The overflow control transistor 130 is connected between the photodiode PD1 and a capacitor 126.

A transfer signal TGL is applied to the gate of the transfer transistor 122. A reset signal RST is applied to the gate of the reset transistor 123. A selection signal SEL is applied to the gate of the selection transistor 125. A pass setting signal FCG is applied to the gate of the pass transistor 127. A switching signal FDG is applied to the gate of the switching transistor 128. An overflow control voltage OFG is applied to the gate of the overflow control transistor 130. The control voltage MVDD is applied to the capacitor 126. The transfer signal TGL, the reset signal RST, the selection signal SEL, the pass setting signal FCG, the switching signal FDG, and the overflow control voltage OFG can be transmitted to each pixel 120 via the horizontal drive line 131 in Fig. 2. The overflow control voltage OFG may be a fixed voltage. The control voltage MVDD can be transmitted to each pixel 120 via the voltage control line 133 of Fig. 2.

Here, in the unselected row, as illustrated in a of the drawing, the reset transistor 123 and the pass transistor 127 are turned off. At this time, the capacitor 126 is in a floating state, and the pixel 120 of the unselected row can be made invisible as a load capacitance viewed from the voltage control line 133.

On the other hand, in the shutter row and the read row, as illustrated in b of the drawing, the reset transistor 123 and the pass transistor 127 are turned on. At this time, since the voltage control line 133 is orthogonal to the horizontal drive line 131, in the shutter row and the read row, the pixels 120 of the unselected row can be made invisible as the load capacitance viewed from the voltage control line 133, and a settling period can be shortened.

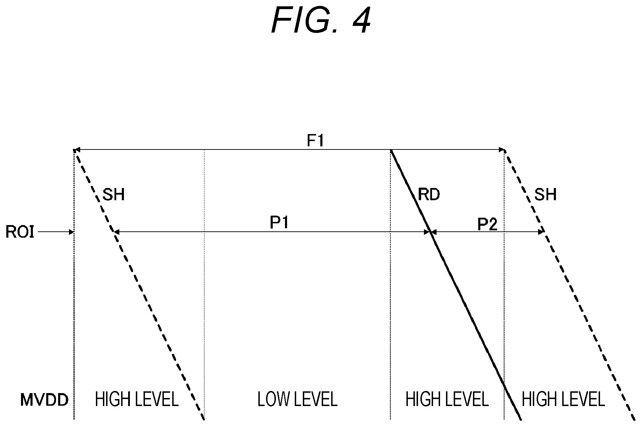

Fig. 4 is a timing chart illustrating an example of a relationship between a read operation and a shutter operation of the solid-state imaging apparatus according to the first embodiment.

In the drawing, the solid-state imaging apparatus repeats a shutter operation SH for each frame F1. At this time, the solid-state imaging apparatus performs a read operation RD between the shutter operations SH in each frame F1.

Here, in a focused row ROI, an accumulation period P1 is set in a period from the shutter operation SH to the read operation RD of each frame F1. Furthermore, a non-accumulation period P2 is set in a period from the read operation RD to the shutter operation SH of the next frame F1.

Furthermore, in the shutter operation SH and the read operation RD, the potential of the voltage control line 133 is set to a high level. In the accumulation operation between the shutter operation SH and the read operation RD, the potential of the voltage control line 133 is set to a low level.

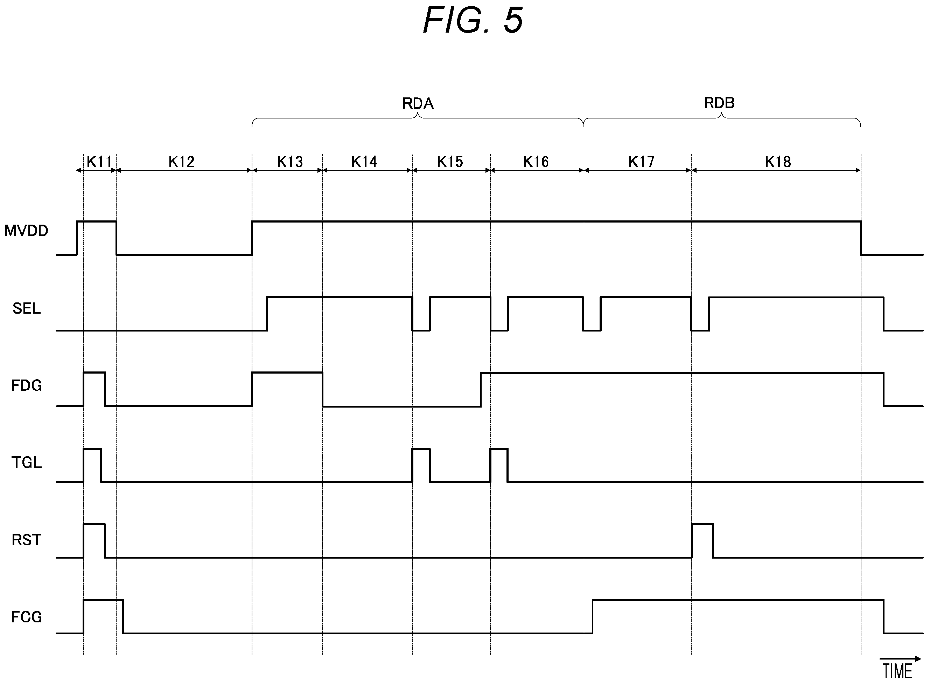

Fig. 5 is a timing chart illustrating an example of waveforms of respective sections in a read operation, a shutter operation, and an accumulation operation of the solid-state imaging apparatus according to the first embodiment.

In the drawing, in a shutter period K11, the control voltage MVDD is set to a high level. The selection signal SEL is set to a low level. At this time, the switching signal FDG, the transfer signal TGL, the reset signal RST, and the pass setting signal FCG rise, the electric charges of the photodiode PD1 and the floating diffusion FD are discharged, and the conversion efficiency in the amplification transistor 124 is reduced. Then, after the switching signal FDG, the transfer signal TGL, and the reset signal RST fall, the control voltage MVDD falls.

In an accumulation period K12, the pass setting signal FCG falls. Then, electric charges are accumulated in each photodiode PD1 on the basis of incidence of light on the photodiode PD1. The electric charges overflowing from the photodiode PD1 are accumulated in the capacitor 126 via the overflow control transistor 130. Here, in the accumulation period K12, the dark current of the capacitor 126 can be reduced by setting the control voltage MVDD to the low level.

Next, in a low-efficiency P-phase single read period K13, the selection signal SEL rises after the switching signal FDG and the control voltage MVDD rise. At this time, the switching transistor 128 is turned on, and the conversion efficiency in the amplification transistor 124 is reduced. Furthermore, the potential of the vertical signal line 132 is set on the basis of the source follower operation when the selection transistor 125 is turned on and the low-efficiency P-phase level of the floating diffusion FD is applied to the gate of the amplification transistor 124. Then, the low-efficiency P-phase level is subjected to AD conversion on the basis of the potential of the vertical signal line 132 at that time.

Next, in a high-efficiency P-phase single read period K14, the switching signal FDG falls. At this time, the switching transistor 128 is turned off, and the conversion efficiency in the amplification transistor 124 is increased. Then, the potential of the vertical signal line 132 is set on the basis of the source follower operation when the high-efficiency P-phase level of the floating diffusion FD is applied to the gate of the amplification transistor 124. Then, the high-efficiency P-phase level is subjected to AD conversion on the basis of the potential of the vertical signal line 132 at that time.

Next, in a high-efficiency D-phase single read period K15, the selection signal SEL falls and the transfer signal TGL rises. At this time, the selection transistor 125 is turned off, the transfer transistor 122 is turned on, and the electric charges accumulated in the photodiode PD1 are transferred to the floating diffusion FD. Then, the selection signal SEL rises and the transfer signal TGL falls. At this time, the potential of the vertical signal line 132 is set on the basis of the source follower operation when the selection transistor 125 is turned on, the transfer transistor 122 is turned off, and the high-efficiency D-phase level of the floating diffusion FD is applied to the gate of the amplification transistor 124. Then, the high-efficiency D-phase level is subjected to AD conversion on the basis of the potential of the vertical signal line 132 at that time. Thereafter, the switching signal FDG rises, and the switching transistor 128 is turned on. At this time, the conversion efficiency in the amplification transistor 124 is reduced.

Next, in a low-efficiency D-phase single read period K16, the selection signal SEL falls and the transfer signal TGL rises. At this time, the selection transistor 125 is turned off, the transfer transistor 122 is turned on, and the electric charges accumulated in the photodiode PD1 are transferred to the floating diffusion FD. Then, the selection signal SEL rises and the transfer signal TGL falls. At this time, the potential of the vertical signal line 132 is set on the basis of the source follower operation when the selection transistor 125 is turned on, the transfer transistor 122 is turned off, and the low-efficiency D-phase level of the floating diffusion FD is applied to the gate of the amplification transistor 124. Then, the low-efficiency D-phase level is subjected to AD conversion on the basis of the potential of the vertical signal line 132 at that time.

In the low-efficiency P-phase single read period K13, the high-efficiency P-phase single read period K14, the high-efficiency D-phase single read period K15, and the low-efficiency D-phase single read period K16, a CDS readout RDA can be performed.

Next, in a D-phase collective read period K17, the pass setting signal FCG rises after the selection signal SEL falls. Thereafter, the selection signal SEL rises. At this time, in a state where the pass transistor 127 is turned on, the selection transistor 125 is turned on, and the potential of the vertical signal line 132 is set on the basis of the source follower operation when the D-phase level of the floating diffusion FD is applied to the gate of the amplification transistor 124. Then, the D-phase level is subjected to AD conversion on the basis of the potential of the vertical signal line 132 at that time.

Next, in a P-phase collective read period K18, the selection signal SEL falls and the reset signal RST rises. At this time, the selection transistor 125 is turned off, the reset transistor 123 is turned on, and the electric charges of the floating diffusion FD are discharged. Then, the reset signal RST falls and the selection signal SEL rises. At this time, the reset transistor 123 is turned off, the selection transistor 125 is turned on, and the potential of the vertical signal line 132 is set on the basis of the source follower operation when the P-phase level of the floating diffusion FD is applied to the gate of the amplification transistor 124. Then, the P-phase level is subjected to AD conversion on the basis of the potential of the vertical signal line 132 at that time.

When the P-phase collective read period K18 is completed, the control voltage MVDD falls. Thereafter, the selection signal SEL, the switching transistor 128, and the pass setting signal FCG fall. At this time, the control voltage MVDD is set to the low level, and the selection transistor 125, the switching transistor 128, and the pass transistor 127 are turned off.

In the D-phase collective read period K17 and the P-phase collective read period K18, double data sampling (DDS) read RDB can be performed.

As described above, in the first embodiment, the voltage control line 133 that pulse-drives the capacitor 126 is made orthogonal to the horizontal drive line 131. Therefore, in a shutter row and a read row, the pixels 120 in the unselected row can be made invisible as the load capacitance viewed from the voltage control line 133, and a settling period can be shortened.

### <2. Second Embodiment>

In the first embodiment described above, the voltage control line 133 that pulse-drives the capacitor 126 is orthogonal to the horizontal drive line 131. In a second embodiment, the capacitor 126 provided in the pixel 120 has a three-dimensional MIM configuration.

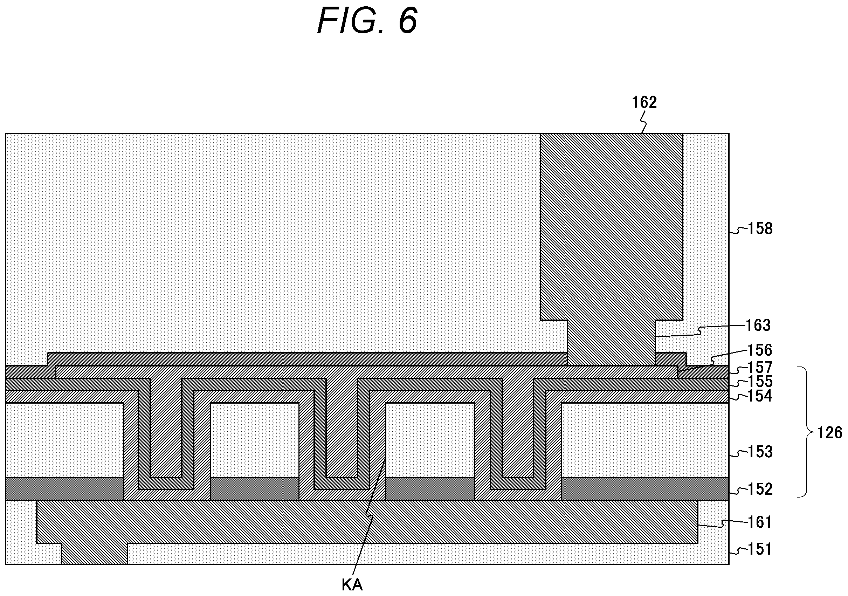

Fig. 6 is a cross-sectional view illustrating a configuration example of a capacitor applied to a solid-state imaging apparatus according to the second embodiment. Note that in the drawings used in the following description, a scale, a shape, and the like may be different from an actual structure in order to facilitate understanding of each configuration.

In the drawing, a wiring layer 161 is embedded in an interlayer insulating layer 151. A passivation layer 152 is stacked on the wiring layer 161, and an interlayer insulating layer 153 is stacked on the passivation layer 152.

An opening KA for exposing the wiring layer 161 is formed in the passivation layer 152 and the interlayer insulating layer 153. A capacitive electrode 154 is formed on the interlayer insulating layer 153 so as to cover a bottom surface and a side surface of the opening KA. On the capacitive electrode 154, a dielectric layer 155 is formed so as to cover a bottom surface and a side surface of the capacitive electrode 154. On the dielectric layer 155, a capacitive electrode 156 is formed so as to cover a bottom surface and a side surface of the dielectric layer 155. The capacitive electrodes 154 and 156 and the dielectric layer 155 can be used as the capacitor 126. At this time, the capacitor 126 can constitute a three-dimensional MIM. On the dielectric layer 155, a passivation layer 157 is formed so as to cover the capacitive electrode 156. An interlayer insulating layer 158 is stacked on the passivation layer 157. A wiring layer 162 is embedded in the interlayer insulating layer 158. The wiring layer 162 is connected to the capacitive electrode 156 via a via 163.

As the materials of the wiring layers 161 and 162, the via 163, and the capacitive electrodes 154 and 156, for example, Cu, Ti, Ta, Al, W, Ni, Ru, Co, TiN, TaN, or WN can be used, and a stacked structure of a plurality of materials may be used.

As the material of the dielectric layer 155, for example, SiO₂, SiON, Si₃N₄, hafnium oxide (HfO₂), aluminum oxide (Al₂O₃), zirconium oxide (ZrO), tantalum oxide (Ta₂O₅), titanium oxide (TiO₂), lanthanum oxide (LaO₃), yttrium oxide (Y₂O₃), aluminum nitride (AlN), hafnium oxynitride (HfON), or aluminum oxynitride (AlON), can be used, and a stacked structure of a plurality of materials may be used.

As the materials of the interlayer insulating layers 151 and 158, for example, an inorganic material such as SiO₂, SiON, SiOC, Si₃N₄, or SiCO, or an organic material having a skeleton of polyimide, acrylic, silicone, or an epoxy group can be used, and a stacked structure of a plurality of materials may be used.

As the materials of the passivation layers 152 and 157, an organic material having a skeleton of polyimide, acrylic, silicone, or an epoxy group, or a material containing a filler such as SiO₂, Al₂O₃, AlN, or BN can be used. The passivation layers 152 and 157 may be chemical vapor deposition (CVD) films or sputtered films.

As described above, in the second embodiment described above, the capacitor 126 provided in the pixel 120 has a three-dimensional MIM configuration. Therefore, the capacitance of the capacitor 126 can be increased without increasing the planar size of the capacitor 126.

### <3. Third Embodiment>

In the first embodiment described above, the voltage control line 133 that pulse-drives the capacitor 126 is orthogonal to the horizontal drive line 131. In a third embodiment, the horizontal drive line 131 and the voltage control line 133 are formed in separate layers, and a power supply line is formed between these layers.

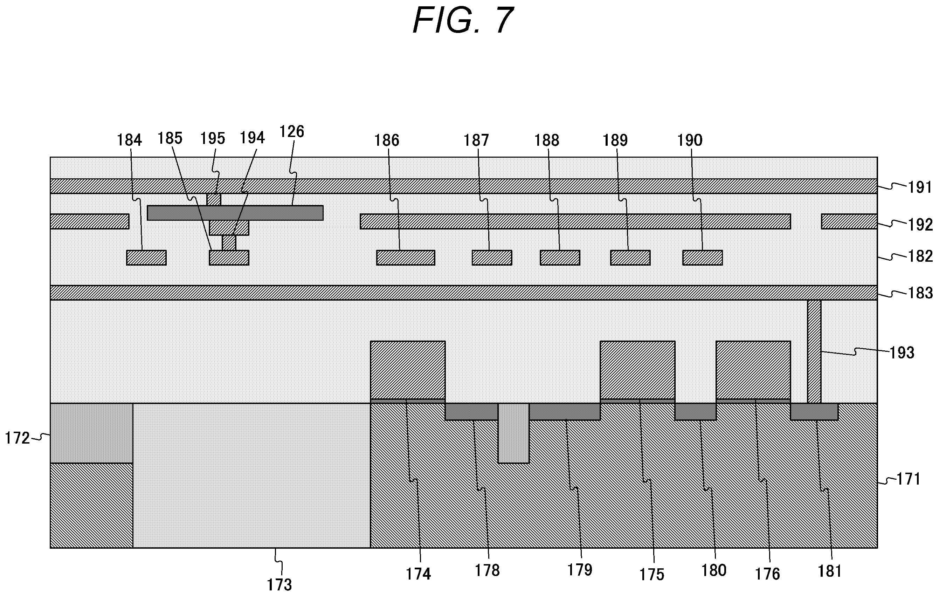

Fig. 7 is a cross-sectional view illustrating a configuration example of wiring applied to a solid-state imaging apparatus according to the third embodiment.

In the drawing, an element isolation layer 172 is formed on a semiconductor substrate 171. The element isolation layer 172 may be shallow trench isolation (STI). Furthermore, on the semiconductor substrate 171, a photoelectric conversion layer 173 and impurity diffusion layers 178 to 181 are formed separately from each other. Furthermore, gate electrodes 174 to 176 are formed on the semiconductor substrate 171 via a gate insulating film. A channel region formed under the gate electrode 174 is disposed between the photoelectric conversion layer 173 and the impurity diffusion layer 178. A channel region formed under the gate electrode 175 is disposed between the impurity diffusion layers 179 and 180. A channel region formed under the gate electrode 176 is disposed between the impurity diffusion layers 180 and 181.

The photoelectric conversion layer 173 can be used for the photodiode PD1. The impurity diffusion layer 178 can be used for the floating diffusion FD. The gate electrode 174 can be used for the transfer transistor 122. The gate electrode 175 can be used for the amplification transistor 124. The gate electrode 176 can be used for the selection transistor 125.

Furthermore, on the semiconductor substrate 171, an insulating layer 182 is formed so as to cover the photoelectric conversion layer 173 and the gate electrodes 174 to 176. At this time, a multilayer wiring can be formed in the insulating layer 182. For example, the wirings 183 to 191, the power supply line 192, and the capacitor 126 can be embedded in the insulating layer 182. The wiring 183 can be disposed in the first layer. The wirings 184 to 190 can be disposed in the second layer. The power supply line 192 can be disposed in the third layer. The wiring 191 can be disposed in the fourth layer. The wiring 183 is connected to the impurity diffusion layer 181 via a via 193. One end of the capacitor 126 is connected to the wiring 185 via a via 194. The other end of the capacitor 126 is connected to the wiring 191 via a via 195.

The wiring 183 can be used for the vertical signal line 132. The wiring 184 can be connected to the gate of overflow control transistor 130. The wiring 185 can be connected to the impurity diffusion layer 178. The wiring 186 can be connected to the gate of the transfer transistor 122. The wiring 187 can be connected to the gate of the switching transistor 128. The wiring 188 can be connected to the gate of the pass transistor 127. The wiring 189 can be connected to the gate of the reset transistor 123. The wiring 190 can be connected to the gate of the selection transistor 125. The wiring 191 can be used for the voltage control line 133. The power supply line 192 can be used to supply the power supply voltage VDD. Note that a gap may be formed in a part of the power supply line 192.

The wirings 183 and 191 extend in the column direction, and the wirings 184 to 190 extend in the row direction. At this time, each of the wirings 184 to 190 can be used for the horizontal drive line 131. Furthermore, the wiring 191 is formed in a layer different from the layers of the wirings 184 to 190. The wiring 191 and the wirings 184 to 190 are shielded by the power supply line 192.

As the material of the semiconductor substrate 171, Si, InGaAs, InP, or the like can be used according to the sensitivity band of the photoelectric conversion layer 173. As the material of the gate electrodes 174 to 176, polycrystalline silicon or the like can be used.

As the materials of the wirings 183 to 191, the power supply line 192, and the vias 193 to 195, for example, Cu, Ti, Ta, Al, W, Ni, Ru, Co, TiN, TaN, and WN can be used, and a stacked structure of a plurality of materials may be used.

As the material of the insulating layer 182, for example, an inorganic material such as SiO₂, SiON, SiOC, Si₃N₄, or SiCO, or an organic material having a polyimide, an acrylic, a silicone, or an epoxy group as a skeleton can be used, and a stacked structure of a plurality of materials may be used.

As described above, in the above-described third embodiment, the horizontal drive line 131 and the voltage control line 133 are formed in separate layers, and the power supply line 192 is formed between these layers. Therefore, coupling between the voltage control line 133 and the horizontal drive line 131 and the vertical signal line 132 can be suppressed.

### <4. Fourth Embodiment>

In the first embodiment described above, the voltage control line 133 that pulse-drives the capacitor 126 provided in the pixel 120 is orthogonal to the horizontal drive line 131. In a fourth embodiment, a plurality of voltage control lines for transmitting control voltages of a plurality of capacitors provided in a pixel is made orthogonal to the horizontal drive line 131.

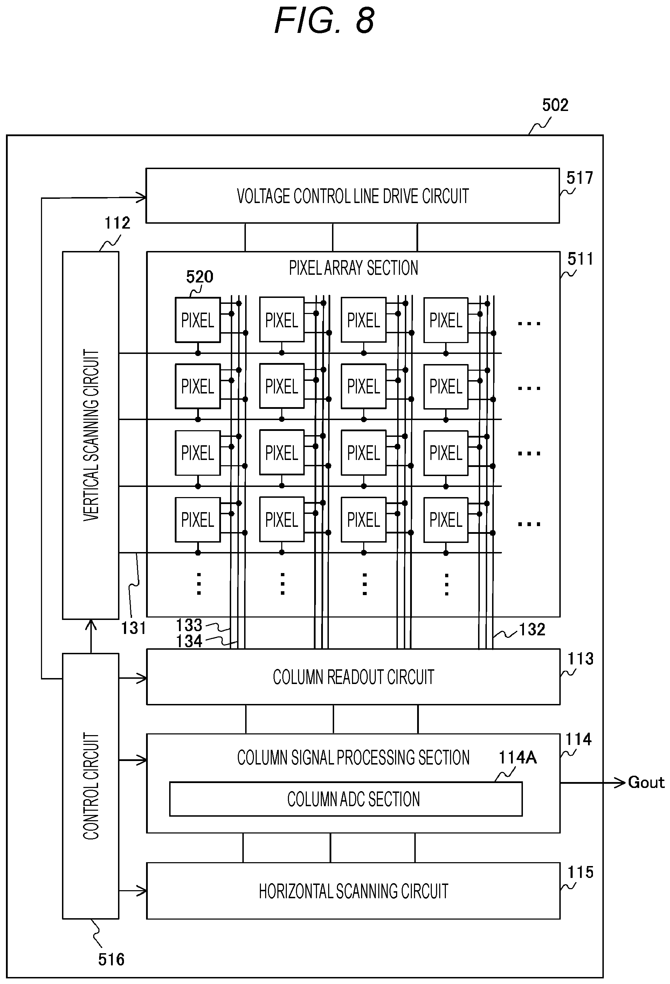

Fig. 8 is a block diagram illustrating a configuration example of a solid-state imaging apparatus according to the fourth embodiment.

In the drawing, a solid-state imaging apparatus 502 includes a pixel array section 511, a control circuit 516, and a voltage control line drive circuit 517 instead of the pixel array section 111, the control circuit 116, and the voltage control line drive circuit 117 of the first embodiment described above. Furthermore, in the solid-state imaging apparatus 502, a voltage control line 134 is added to the solid-state imaging apparatus 102 of the first embodiment described above. Other configurations of the solid-state imaging apparatus 502 of the fourth embodiment are similar to those of the solid-state imaging apparatus 102 of the first embodiment described above.

The pixel array section 511 includes a plurality of pixels 520. The pixels 520 are arranged in a matrix along the row direction and the column direction. Each of the pixels 520 includes a plurality of capacitors that accumulates electric charges overflowing from the photodiode. These capacitors may be lateral overflow storage capacitors. Each pixel 520 may include a plurality of photodiodes having sensitivities different from each other. Furthermore, each pixel 520 can form a source follower with the column readout circuit 113 at the time of signal readout.

Each pixel 520 is connected to the horizontal drive line 131 for each row, and is connected to the vertical signal line 132 and the plurality of voltage control lines 133 and 134 for each column. Each of the voltage control lines 133 and 134 transmits a control voltage applied to a plurality of capacitors provided in each pixel 120. Each of the voltage control lines 133 and 134 is orthogonal to the horizontal drive line 131. At this time, the voltage control lines 133 and 134 can be parallel to the vertical signal line 132.

The voltage control line drive circuit 517 drives the plurality of voltage control lines 133 and 134 for each column. At this time, the voltage control line drive circuit 517 can pulse-drive the plurality of voltage control lines 133 and 134 for each column at the same timing. For example, the voltage control line drive circuit 517 can set the potentials of the voltage control lines 133 and 134 to the high level during the shutter period and the read period of the pixel 520, and can set the potentials of the voltage control lines 133 and 134 to the low level during the accumulation period of the pixel 520.

The control circuit 516 controls the vertical scanning circuit 112, the column readout circuit 113, the column signal processing section 114, the horizontal scanning circuit 115, and the voltage control line drive circuit 517. At this time, the control circuit 516 can cause the vertical scanning circuit 112, the column readout circuit 113, the column signal processing section 114, the horizontal scanning circuit 115, and the voltage control line drive circuit 517 to cooperate so that the accumulation operation, the shutter operation, and the read operation are performed for each row in each frame.

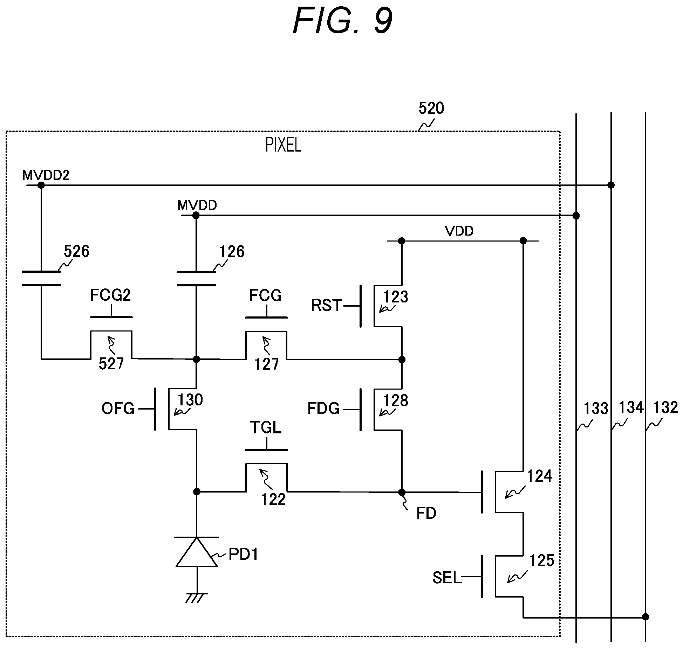

Fig. 9 is a diagram illustrating a circuit configuration example of the pixel provided in a solid-state imaging apparatus according to the fourth embodiment.

In the drawing, in the pixel 520, a pass transistor 527 and a capacitor 526 are added to the pixel 120 of the first embodiment described above. Other configurations of the pixel 520 of the fourth embodiment are similar to those of the pixel 120 of the first embodiment described above.

The capacitor 526 accumulates the electric charges overflowing from the photodiode PD1. The capacitor 526 may be shielded from light. One end of the capacitor 526 is connected to a control voltage MVDD2, and the other end of the capacitor 526 is connected to the overflow control transistor 130 via the pass transistor 527. At this time, the control voltage MVDD2 is applied to the capacitor 526.

The pass transistor 527 sets a path through which the electric charges accumulated in the capacitor 526 are transferred to the floating diffusion FD. The pass transistor 527 is connected between a connection point between the overflow control transistor 130 and the capacitor 126, and capacitor 526. The pass setting signal FCG2 is applied to the gate of the pass transistor 527. The pass setting signal FCG2 can be transmitted to each pixel 520 via the horizontal drive line 131 in Fig. 2. The control voltage MVDD2 can be transmitted to each pixel 520 via the voltage control line 134.

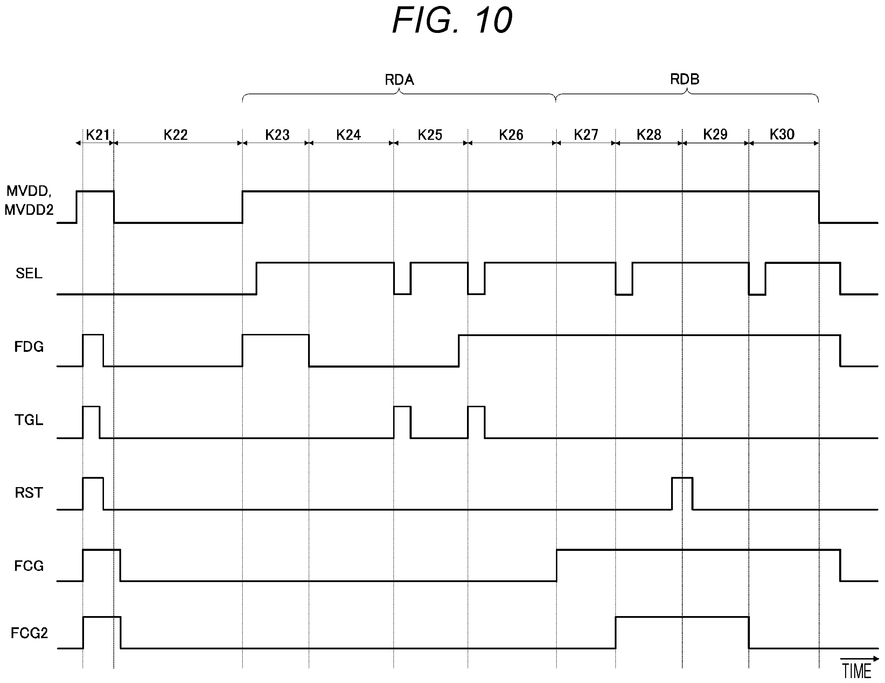

Fig. 10 is a timing chart illustrating an example of waveforms of respective sections in a read operation, a shutter operation, and an accumulation operation of the solid-state imaging apparatus according to the fourth embodiment.

In the drawing, in a shutter period K21, the control voltages MVDD and MVDD2 are set to a high level. The selection signal SEL is set to a low level. At this time, the switching signal FDG, the transfer signal TGL, the reset signal RST, and the pass setting signals FCG and FCG2 rise, the electric charges of the photodiode PD1 and the floating diffusion FD are discharged, and the conversion efficiency in the amplification transistor 124 is reduced. Then, after the switching signal FDG, the transfer signal TGL, and the reset signal RST fall, the control voltage MVDD falls.

In an accumulation period K22, the pass setting signals FCG and FCG2 fall. Then, electric charges are accumulated in each photodiode PD1 on the basis of incidence of light on the photodiode PD1. The electric charges overflowing from the photodiode PD1 are accumulated in the capacitors 126 and 526 via the overflow control transistor 130. Here, in the accumulation period K12, the dark current of each of the capacitors 126 and 526 can be reduced by setting the control voltages MVDD and MVDD2 to low levels.

Next, in a low-efficiency P-phase single read period K23, the selection signal SEL rises after the switching signal FDG and the control voltages MVDD and MVDD2 rise. At this time, the switching transistor 128 is turned on, and the conversion efficiency in the amplification transistor 124 is reduced. Furthermore, the potential of the vertical signal line 132 is set on the basis of the source follower operation when the selection transistor 125 is turned on and the low-efficiency P-phase level of the floating diffusion FD is applied to the gate of the amplification transistor 124. Then, the low-efficiency P-phase level is subjected to AD conversion on the basis of the potential of the vertical signal line 132 at that time.

Next, in a high-efficiency P-phase single read period K24, the switching signal FDG falls. At this time, the switching transistor 128 is turned off, and the conversion efficiency in the amplification transistor 124 is increased. Then, the potential of the vertical signal line 132 is set on the basis of the source follower operation when the high-efficiency P-phase level of the floating diffusion FD is applied to the gate of the amplification transistor 124. Then, the high-efficiency P-phase level is subjected to AD conversion on the basis of the potential of the vertical signal line 132 at that time.

Next, in a high-efficiency D-phase single read period K25, the selection signal SEL falls and the transfer signal TGL rises. At this time, the selection transistor 125 is turned off, the transfer transistor 122 is turned on, and the electric charges accumulated in the photodiode PD1 are transferred to the floating diffusion FD. Then, the selection signal SEL rises and the transfer signal TGL falls. At this time, the potential of the vertical signal line 132 is set on the basis of the source follower operation when the selection transistor 125 is turned on, the transfer transistor 122 is turned off, and the high-efficiency D-phase level of the floating diffusion FD is applied to the gate of the amplification transistor 124. Then, the high-efficiency D-phase level is subjected to AD conversion on the basis of the potential of the vertical signal line 132 at that time. Thereafter, the switching signal FDG rises, and the switching transistor 128 is turned on. At this time, the conversion efficiency in the amplification transistor 124 is reduced.

Next, in a low-efficiency D-phase single read period K26, the selection signal SEL falls and the transfer signal TGL rises. At this time, the selection transistor 125 is turned off, the transfer transistor 122 is turned on, and the electric charges accumulated in the photodiode PD1 are transferred to the floating diffusion FD. Then, the selection signal SEL rises and the transfer signal TGL falls. At this time, the potential of the vertical signal line 132 is set on the basis of the source follower operation when the selection transistor 125 is turned on, the transfer transistor 122 is turned off, and the low-efficiency D-phase level of the floating diffusion FD is applied to the gate of the amplification transistor 124. Then, the low-efficiency D-phase level is subjected to AD conversion on the basis of the potential of the vertical signal line 132 at that time.

In the low-efficiency P-phase single read period K23, the high-efficiency P-phase single read period K24, the high-efficiency D-phase single read period K25, and the low-efficiency D-phase single read period K26, the CDS read RDA can be performed.

Next, in a D-phase collective read first period K27, the pass setting signal FCG rises, and the pass transistor 127 is turned on. At this time, the potential of the vertical signal line 132 is set on the basis of the source follower operation when the D-phase level of the floating diffusion FD is applied to the gate of the amplification transistor 124. Then, the D-phase level is subjected to AD conversion on the basis of the potential of the vertical signal line 132 at that time.

Next, in a D-phase collective read first period K28, the selection signal SEL falls and the pass setting signal FCG2 rises. Thereafter, the selection signal SEL rises. At this time, in a state where the pass transistor 527 is turned on, the potential of the vertical signal line 132 is set on the basis of the source follower operation when the selection transistor 125 is turned on and the D-phase level of the floating diffusion FD is applied to the gate of the amplification transistor 124. Then, the D-phase level is subjected to AD conversion on the basis of the potential of the vertical signal line 132 at that time. Thereafter, the reset signal RST rises. At this time, the reset transistor 123 is turned on, and the electric charges of the floating diffusion FD are discharged.

Next, in a P-phase collective read first period K29, the reset signal RST falls, and the reset transistor 123 is turned off. At this time, the potential of the vertical signal line 132 is set on the basis of the source follower operation when the P-phase level of the floating diffusion FD is applied to the gate of the amplification transistor 124. Then, the P-phase level is subjected to AD conversion on the basis of the potential of the vertical signal line 132 at that time.

Next, in the P-phase collective read second period K30, the selection signal SEL falls and the pass setting signal FCG2 falls. Then, the selection signal SEL rises, and the selection transistor 125 is turned on. At this time, the potential of the vertical signal line 132 is set on the basis of the source follower operation when the P-phase level of the floating diffusion FD is applied to the gate of the amplification transistor 124. Then, the P-phase level is subjected to AD conversion on the basis of the potential of the vertical signal line 132 at that time.

In the D-phase collective read first period K27, the D-phase collective read second period K28, the P-phase collective read first period K29, and the P-phase collective read second period K30, the DDS read RDB can be performed.

As described above, in the above-described fourth embodiment, the plurality of voltage control lines 133 and 134 that respectively transmits the control voltages MVDD and MVDD2 of the plurality of capacitors 126 and 526 provided in the pixel 520 is made orthogonal to the horizontal drive line 131. Therefore, in the shutter row and the read row, the pixels 520 in the unselected row can be made invisible as load capacitances viewed from the voltage control lines 133 and 134, and a settling period can be shortened while the dynamic range is expanded.

### <5. Fifth Embodiment>

In the first embodiment described above, the voltage control line 133 that pulse-drives the capacitor 126 provided in the pixel 120 is orthogonal to the horizontal drive line 131. In a fifth embodiment, a plurality of photoelectric conversion sections having different sensitivities is provided in a pixel.

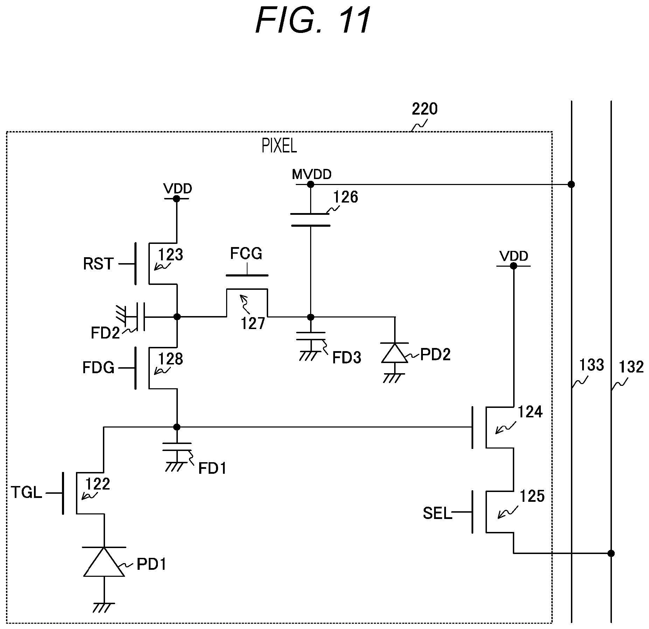

Fig. 11 is a diagram illustrating a circuit configuration example of a pixel provided in a solid-state imaging apparatus according to the fifth embodiment.

In the drawing, in a pixel 220, a photodiode PD2 is added to the pixel 120 of the first embodiment described above. Furthermore, in the pixel 220, the overflow control transistor 130 is removed from the pixel 120 of the first embodiment described above. Other configurations of the pixel 220 of the fifth embodiment are similar to those of the pixel 120 of the first embodiment described above.

The photodiode PD2 performs photoelectric conversion and accumulates photoelectrically converted electric charges. The sensitivity of the photodiode PD2 can be made smaller than that of the photodiode PD1. A cathode of the photodiode PD2 is connected to a connection point between the capacitor 126 and the pass transistor 127.

Furthermore, a floating diffusion FD1 is provided at a connection point between the transfer transistor 122 and the switching transistor 128. A floating diffusion FD2 is provided at a connection point between the reset transistor 123 and the switching transistor 128. A floating diffusion FD3 is provided at a connection point between the capacitor 126 and the pass transistor 127.

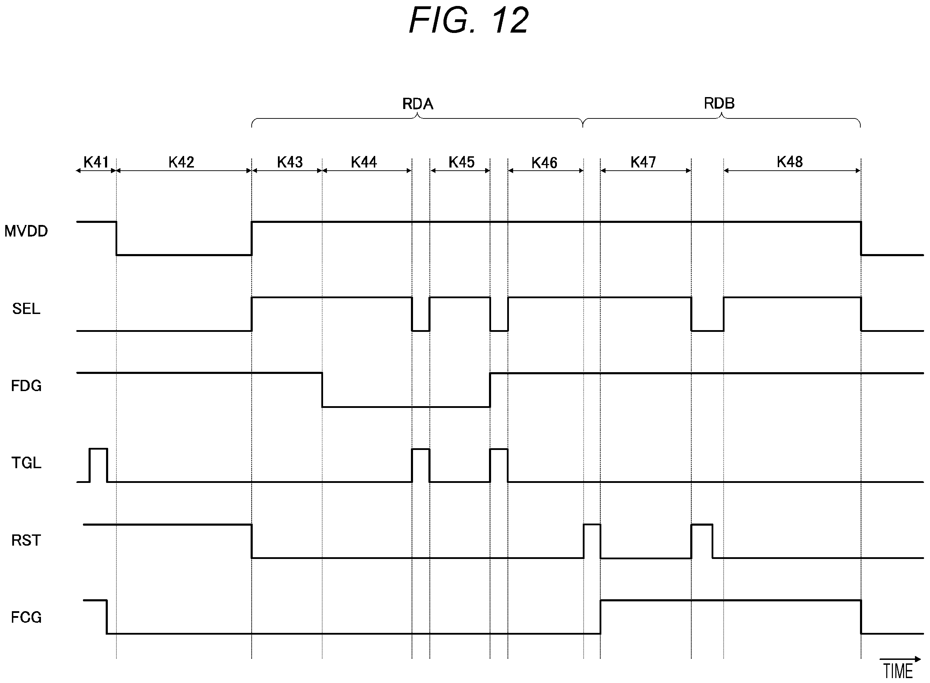

Fig. 12 is a timing chart illustrating an example of waveforms of respective sections in a read operation, a shutter operation, and an accumulation operation of the solid-state imaging apparatus according to the fifth embodiment.

In the drawing, in a shutter period K41, the control voltage MVDD, the switching signal FDG, and the reset signal RST are set to a high level. The selection signal SEL is set to a low level. At this time, when the pass setting signal FCG is at a high level, the transfer signal TGL rises, electric charges in the photodiodes PD1 and PD2 and the floating diffusions FD1 to FD3 are discharged, and conversion efficiency in the amplification transistor 124 is reduced. Then, after the transfer signal TGL and the pass setting signal FCG fall, the control voltage MVDD falls.

In an accumulation period K42, electric charges are accumulated in the photodiodes PD1 and PD2 on the basis of incidence of light on the photodiodes PD1 and PD2. Electric charges overflowing from the photodiode PD2 are accumulated in the capacitor 126. Here, in the accumulation period K42, the dark current of the capacitor 126 can be reduced by setting the control voltage MVDD to a low level.

Next, in a low-efficiency P-phase single read period K43, the selection signal SEL and the control voltage MVDD rise, and the reset signal RST falls. At this time, the switching transistor 128 is turned on, and the conversion efficiency in the amplification transistor 124 is reduced. Furthermore, the reset transistor 123 is turned off, the selection transistor 125 is turned on, and the potential of the vertical signal line 132 is set on the basis of the source follower operation when the low-efficiency P-phase levels of the floating diffusions FD1 and FD2 are applied to the gate of the amplification transistor 124. Then, the low-efficiency P-phase level is subjected to AD conversion on the basis of the potential of the vertical signal line 132 at that time.

Next, in a high-efficiency P-phase single read period K44, the switching signal FDG falls. At this time, the switching transistor 128 is turned off, and the conversion efficiency in the amplification transistor 124 is increased. Then, the potential of the vertical signal line 132 is set on the basis of the source follower operation when the high-efficiency P-phase level of the floating diffusion FD1 is applied to the gate of the amplification transistor 124. Then, the high-efficiency P-phase level is subjected to AD conversion on the basis of the potential of the vertical signal line 132 at that time.

Thereafter, the selection signal SEL falls and the transfer signal TGL rises. At this time, the selection transistor 125 is turned off, the transfer transistor 122 is turned on, and the electric charges accumulated in the photodiode PD1 are transferred to the floating diffusion FD1.

Next, in a high-efficiency D-phase single read period K45, the selection signal SEL rises and the transfer signal TGL falls. At this time, the selection transistor 125 is turned on, the transfer transistor 122 is turned off, and the potential of the vertical signal line 132 is set on the basis of the source follower operation when the high-efficiency D-phase level of the floating diffusion FD1 is applied to the gate of the amplification transistor 124. Then, the high-efficiency D-phase level is subjected to AD conversion on the basis of the potential of the vertical signal line 132 at that time.

Thereafter, the selection signal SEL falls, and the transfer signal TGL and the switching signal FDG rise. At this time, the selection transistor 125 is turned off, the transfer transistor 122 and the switching transistor 128 are turned on, and the electric charges accumulated in the photodiode PD1 are transferred to the floating diffusions FD1 and FD2. At this time, the conversion efficiency in the amplification transistor 124 is reduced.

Next, in a low-efficiency D-phase single read period K46, the selection signal SEL rises and the transfer signal TGL falls. At this time, the potential of the vertical signal line 132 is set on the basis of the source follower operation when the selection transistor 125 is turned on, the transfer transistor 122 is turned off, and the low-efficiency D-phase levels of the floating diffusions FD1 and FD2 are applied to the gate of the amplification transistor 124. Then, the low-efficiency D-phase level is subjected to AD conversion on the basis of the potential of the vertical signal line 132 at that time.

In the low-efficiency P-phase single read period K43, the high-efficiency P-phase single read period K44, the high-efficiency D-phase single read period K45, and the low-efficiency D-phase single read period K46, the CDS read RDA can be performed.

Thereafter, the reset signal RST rises. At this time, the reset transistor 123 is turned on, and the electric charges of the floating diffusions FD1 and FD2 are discharged.

Next, in a D-phase collective read period K47, the reset signal RST falls and the pass setting signal FCG rises. At this time, the pass transistor 127 is turned on, and the potential of the vertical signal line 132 is set on the basis of the source follower operation when the D-phase levels of the floating diffusions FD1 to FD3 are applied to the gate of the amplification transistor 124. Then, the D-phase level is subjected to AD conversion on the basis of the potential of the vertical signal line 132 at that time.

Thereafter, the reset signal RST rises and the selection signal SEL falls. At this time, the reset transistor 123 is turned on, the selection transistor 125 is turned off, and the electric charges in the floating diffusions FD1 to FD3 are discharged. Thereafter, the reset signal RST falls, and the reset transistor 123 is turned off.

Next, in a P-phase collective read period K48, the selection signal SEL rises. At this time, the potential of the vertical signal line 132 is set on the basis of the source follower operation when the selection transistor 125 is turned on and the P-phase levels of the floating diffusions FD1 to FD3 are applied to the gate of the amplification transistor 124. Then, the P-phase level is subjected to AD conversion on the basis of the potential of the vertical signal line 132 at that time.

In the D-phase collective read period K47 and the P-phase collective read period K48, the DDS read RDB can be performed.

As described above, in the above-described fifth embodiment, the plurality of photodiodes PD1 and PD2 having sensitivities different from each other is provided in the pixel 220, and the voltage control line 133 that pulse-drives the capacitor 126 is made orthogonal to the horizontal drive line 131. Therefore, the dynamic range can be expanded while reducing the dark current of the capacitor 126, and a settling period can be shortened.

### <6. Sixth Embodiment>

In the above-described fifth embodiment, the plurality of photodiodes PD1 and PD2 having different sensitivities is provided in the pixel 220. In a sixth embodiment, transfer transistors different from each other are connected to a plurality of photodiodes PD1 and PD2 different from each other in sensitivity.

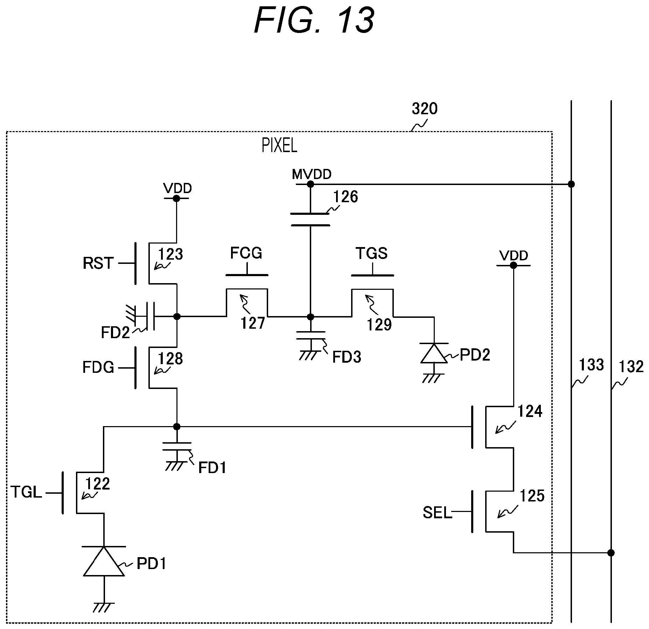

Fig. 13 is a diagram illustrating a circuit configuration example of a pixel provided in a solid-state imaging apparatus according to the sixth embodiment.

In the drawing, in a pixel 320, a transfer transistor 129 is added to the pixel 220 of the above-described fifth embodiment. Other configurations of the pixel 320 of the sixth embodiment are similar to those of the pixel 220 of the fifth embodiment described above.

The transfer transistor 129 transfers electric charges accumulated in the photodiode PD2 to the floating diffusion FD3. The transfer transistor 129 is connected between a connection point of the capacitor 126 and the pass transistor 127, and a cathode of the photodiode PD2. A transfer signal TGS is applied to the gate of the transfer transistor 129. The transfer signal TGS can be transmitted to each pixel 120 via the horizontal drive line 131 of Fig. 2.

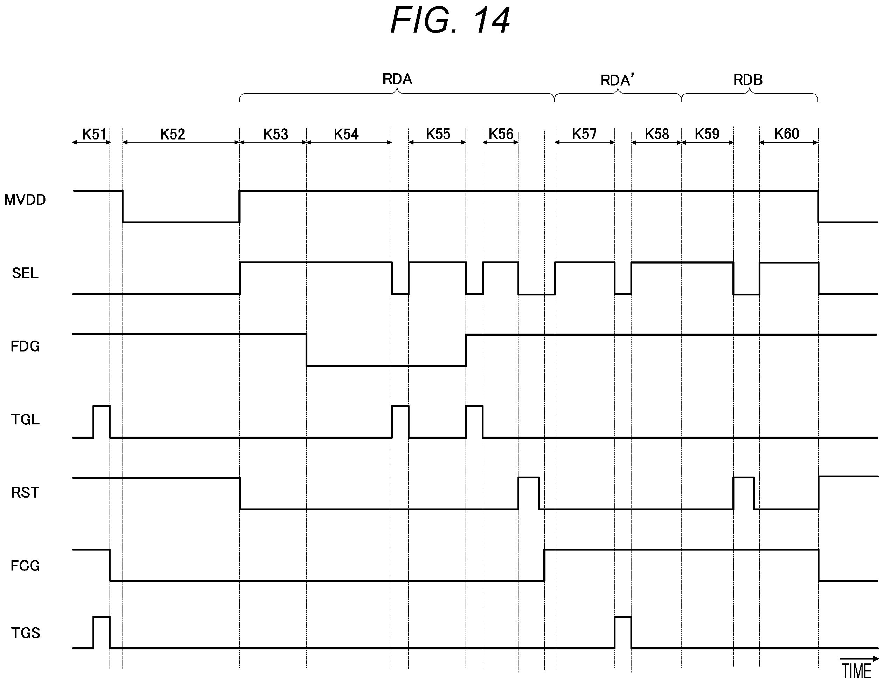

Fig. 14 is a timing chart illustrating an example of waveforms of respective sections in a read operation, a shutter operation, and an accumulation operation of the solid-state imaging apparatus according to the sixth embodiment.

In the drawing, in a shutter period K51, the control voltage MVDD, the switching signal FDG, the pass setting signal FCG, and the reset signal RST are set to a high level. The selection signal SEL is set to a low level. At this time, the transfer signals TGL and TGS rise, electric charges in the photodiodes PD1 and PD2 and the floating diffusions FD1 to FD3 are discharged, and the conversion efficiency in the amplification transistor 124 is reduced. Then, the transfer signals TGL and TGS and the pass setting signal FCG fall.

In an accumulation period K52, the control voltage MVDD falls. At this time, electric charges are accumulated in the photodiodes PD1 and PD2 on the basis of incidence of light on the photodiodes PD1 and PD2. Here, in the accumulation period K52, the dark current of the capacitor 126 can be reduced by setting the control voltage MVDD to a low level.

Next, in a low-efficiency first P-phase single read period K53, the selection signal SEL and the control voltage MVDD rise, and the reset signal RST falls. At this time, the switching transistor 128 is turned on, and the conversion efficiency in the amplification transistor 124 is reduced. Furthermore, the reset transistor 123 is turned off, the selection transistor 125 is turned on, and the potential of the vertical signal line 132 is set on the basis of the source follower operation when the low-efficiency P-phase levels of the floating diffusions FD1 and FD2 are applied to the gate of the amplification transistor 124. Then, the low-efficiency first P-phase level is subjected to AD conversion on the basis of the potential of the vertical signal line 132 at that time.

Next, in a high-efficiency first P-phase single read period K54, the switching signal FDG falls. At this time, the switching transistor 128 is turned off, and the conversion efficiency in the amplification transistor 124 is increased. Then, the potential of the vertical signal line 132 is set on the basis of the source follower operation when the high-efficiency P-phase level of the floating diffusion FD1 is applied to the gate of the amplification transistor 124. Then, the high-efficiency first P-phase level is subjected to AD conversion on the basis of the potential of the vertical signal line 132 at that time.

Thereafter, the selection signal SEL falls and the transfer signal TGL rises. At this time, the selection transistor 125 is turned off, the transfer transistor 122 is turned on, and the electric charges accumulated in the photodiode PD1 are transferred to the floating diffusion FD1.

Next, in a high-efficiency first D-phase single read period K55, the selection signal SEL rises and the transfer signal TGL falls. At this time, the selection transistor 125 is turned on, the transfer transistor 122 is turned off, and the potential of the vertical signal line 132 is set on the basis of the source follower operation when the high-efficiency D-phase level of the floating diffusion FD1 is applied to the gate of the amplification transistor 124. Then, the high-efficiency first D-phase level is subjected to AD conversion on the basis of the potential of the vertical signal line 132 at that time.

Thereafter, the selection signal SEL falls, and the transfer signal TGL and the switching signal FDG rise. At this time, the selection transistor 125 is turned off, the transfer transistor 122 and the switching transistor 128 are turned on, and the electric charges accumulated in the photodiode PD1 are transferred to the floating diffusions FD1 and FD2. At this time, the conversion efficiency in the amplification transistor 124 is reduced.

Next, in a low-efficiency first D-phase single read period K56, the selection signal SEL rises and the transfer signal TGL falls. At this time, the potential of the vertical signal line 132 is set on the basis of the source follower operation when the selection transistor 125 is turned on, the transfer transistor 122 is turned off, and the low-efficiency D-phase levels of the floating diffusions FD1 and FD2 are applied to the gate of the amplification transistor 124. Then, the low-efficiency first D-phase level is subjected to AD conversion on the basis of the potential of the vertical signal line 132 at that time.

In the low-efficiency first P-phase single read period K53, the high-efficiency first P-phase single read period K54, the high-efficiency first D-phase single read period K55, and the low-efficiency first D-phase single read period K56, the CDS read RDA can be performed.

Thereafter, the selection signal SEL falls and the reset signal RST rises. At this time, the reset transistor 123 is turned on, and the electric charges of the floating diffusions FD1 and FD2 are discharged.

Moreover, after the reset signal RST falls, the pass setting signal FCG rises. At this time, the reset transistor 123 is turned off, and the pass transistor 127 is turned on.

Next, in a second P-phase single read period K57, the selection signal SEL rises. At this time, the potential of the vertical signal line 132 is set on the basis of the source follower operation when the selection transistor 125 is turned on and the second P-phase levels of the floating diffusion FD1 to the FD3 are applied to the gate of the amplification transistor 124. Then, the second P-phase level is subjected to AD conversion on the basis of the potential of the vertical signal line 132 at that time.

Thereafter, the selection signal SEL falls and the transfer signal TGS rises. At this time, the selection transistor 125 is turned off, the transfer transistor 129 is turned on, and the electric charges accumulated in the photodiode PD2 are transferred to the floating diffusions FD1 to FD3.

Next, in a second D-phase single read period K58, the selection signal SEL rises and the transfer signal TGS falls. At this time, the potential of the vertical signal line 132 is set on the basis of the source follower operation when the second D-phase levels of the floating diffusions FD1 to FD3 are applied to the gate of the amplification transistor 124. Then, the second D-phase level is subjected to AD conversion on the basis of the potential of the vertical signal line 132 at that time.

Next, in a D-phase collective read period K59, the potential of the vertical signal line 132 is set on the basis of the source follower operation when the D-phase levels of the floating diffusions FD1 to FD3 are applied to the gate of the amplification transistor 124. Then, the D-phase level is subjected to AD conversion on the basis of the potential of the vertical signal line 132 at that time.

Thereafter, the reset signal RST rises and the selection signal SEL falls. At this time, the reset transistor 123 is turned on, the selection transistor 125 is turned off, and the electric charges in the floating diffusions FD1 to FD3 are discharged. Thereafter, the reset signal RST falls, and the reset transistor 123 is turned off.

Next, in a P-phase collective read period K60, the selection signal SEL rises. At this time, the potential of the vertical signal line 132 is set on the basis of the source follower operation when the selection transistor 125 is turned on and the P-phase levels of the floating diffusions FD1 to FD3 are applied to the gate of the amplification transistor 124. Then, the P-phase level is subjected to AD conversion on the basis of the potential of the vertical signal line 132 at that time.

In the D-phase collective read period K59 and the P-phase collective read period K60, the DDS read RDB can be performed.

As described above, in the above-described sixth embodiment, the transfer transistors 122 and 129 different from each other are connected to the plurality of photodiodes PD1 and PD2 different from each other in sensitivity. Therefore, the dynamic range can be expanded while reducing the dark current of the capacitor 126, and a settling period can be shortened.

### <7. Seventh Embodiment>

In the first embodiment described above, the voltage control line 133 that pulse-drives the capacitor 126 is orthogonal to the horizontal drive line 131. In a seventh embodiment, a semiconductor chip provided with a pixel array section in which pixels are arranged in a matrix is stacked.

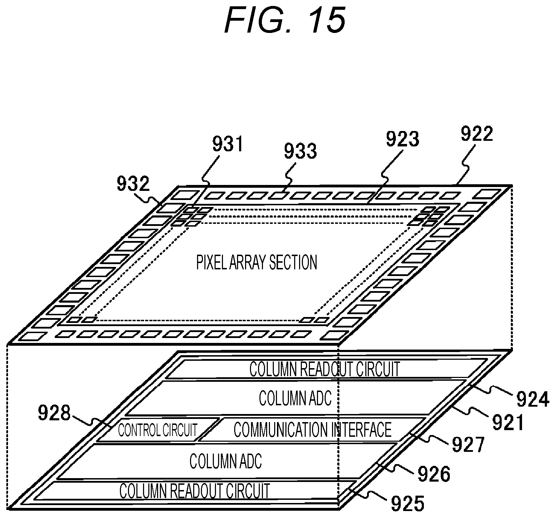

Fig. 15 is a perspective view illustrating a stacking example of pixel array sections according to the seventh embodiment.

In Fig. 15, a solid-state imaging apparatus includes semiconductor chips 921 and 922. The semiconductor chip 922 is stacked on the semiconductor chip 921.

A pixel array section 923 is formed on the semiconductor chip 922. The pixel array section 923 includes pixels 931 arranged in a matrix in the row direction and the column direction. The pixel 931 may be any pixel of the first and fourth to sixth embodiments described above. Furthermore, in the first, fifth, and sixth embodiments described above, the horizontal drive line 131, the vertical signal line 132, and the voltage control line 133 are formed in the pixel array section 923. In the above-described fourth embodiment, the horizontal drive line 131, the vertical signal line 132, and the voltage control lines 133 and 134 are formed in the pixel array section 923. Pad electrodes 932 and via electrodes 933 are formed around the pixel array section 923. The via electrodes 933 penetrate the semiconductor chip 922 and can electrically connect the semiconductor chips 921 and 922 together.

A peripheral circuit 924 is formed on the semiconductor chip 921. In the peripheral circuit 924, a column readout circuit 925, a column ADC 926, a communication interface 927, and a control circuit 928 are formed. The column readout circuit 925 and the column ADC 926 may be formed so as to correspond to positions on both sides of the pixel array section 923 in the column direction.

The semiconductor chips 921 and 922 may be directly bonded. For the direct bonding of the semiconductor chips 921 and 922, hybrid bonding can be used. At this time, the semiconductor chips 921 and 922 may be electrically connected on the basis of Cu-Cu connection. A material of the semiconductor substrate used for the semiconductor chips 921 and 922 may be Si, InGaAs, or InP.

As described above, in the above-described seventh embodiment, the semiconductor chip 922 on which the pixel array section 923 is formed is stacked on the semiconductor chip 921 on which the peripheral circuit 924 is formed. This makes it possible to increase sensitivity of the solid-state imaging apparatus while suppressing an increase in mounting area of the semiconductor chip on which the solid-state imaging apparatus is formed.

### <7. Application Example to Mobile Body>

The technology according to the present disclosure (the present technology) can be applied to various products. For example, the technology according to the present disclosure may also be implemented as a device mounted on any type of mobile body such as an automobile, an electric vehicle, a hybrid electric vehicle, a motorcycle, a bicycle, a personal mobility, an airplane, a drone, a vessel, or a robot.

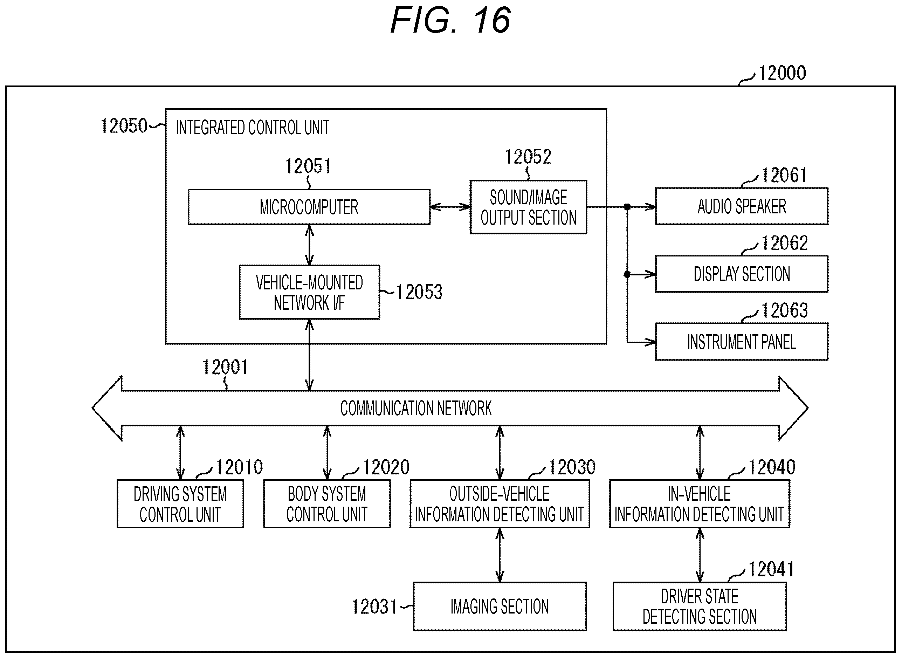

Fig. 16 is a block diagram illustrating an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example illustrated in Fig. 16, the vehicle control system 12000 includes a driving system control unit 12010, a body system control unit 12020, an outside-vehicle information detecting unit 12030, an in-vehicle information detecting unit 12040, and an integrated control unit 12050. Furthermore, a microcomputer 12051, a sound/image output section 12052, and a vehicle-mounted network interface (I/F) 12053 are illustrated as functional configurations of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. Furthermore, the light received by the imaging section 12031 may be visible light, or may be invisible light such as infrared rays.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 16, an audio speaker 12061, a display section 12062, and an instrument panel 12063 are illustrated as the output device. The display section 12062 may, for example, include at least one of an on-board display and a head-up display.

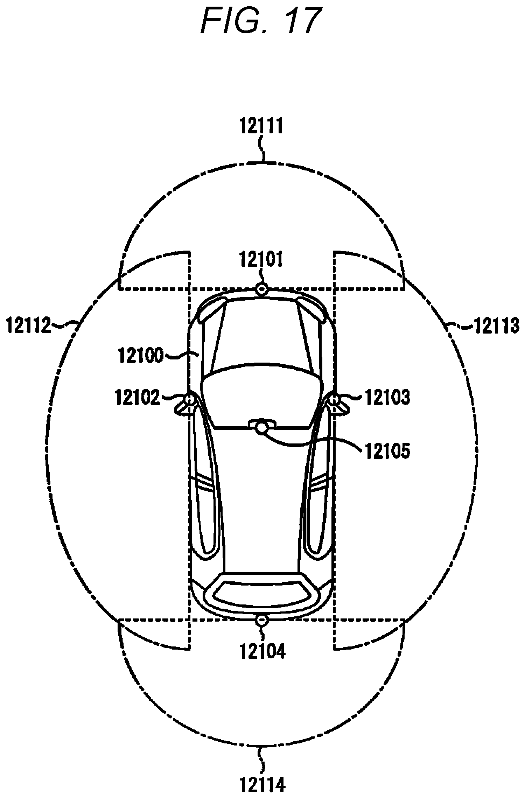

Fig. 17 is a diagram illustrating an example of the installation position of the imaging section 12031.

In Fig. 17, the imaging section 12031 includes imaging sections 12101, 12102, 12103, 12104, and 12105.

The imaging sections 12101, 12102, 12103, 12104, and 12105 are provided, for example, at positions such as a front nose, sideview mirrors, a rear bumper, a back door, and an upper portion of a windshield within the interior of a vehicle 12100. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors acquire mainly images of a side area of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Note that Fig. 17 illustrates an example of imaging ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

In the above, an example of the vehicle control system to which the technology according to the present disclosure is applicable has been described. The technology according to the present disclosure can be applied to the imaging section 12031 among the configurations described above. Specifically, for example, the above-described imaging apparatus can be applied to the imaging section 12031. By applying the technology according to the present disclosure to the vehicle control system 12000, the dynamic range can be expanded while shortening the settling period.

Note that the embodiments described above are examples for embodying the present technology, and the matters in the embodiments and the matters specifying the invention in the claims have correspondence relationships. Similarly, the respective matters specifying the invention in the claims and the respective matters with the same names in the embodiments of the present technology have correspondence relationships. The present technology, however, is not limited to the embodiments, and can be embodied by making various modifications to the embodiments without departing from the scope of the present technology. Furthermore, the effects described in the present specification are merely examples and not limited, and other effects may be provided.

Note that the present technology can also have the following configurations.
(1) An imaging apparatus including:
   a photoelectric conversion section;
   a transfer transistor connected to the photoelectric conversion section;
   a reset transistor including one terminal connected to the transfer transistor and the other terminal connected to a power supply voltage;
   a capacitor including one terminal connected to the photoelectric conversion section and the other terminal connected to a control voltage;
   a voltage control line that transmits the control voltage; and
   a control line that transmits a transfer signal to the transfer transistor,
   in which the voltage control line is orthogonal to the control line.
(2) The imaging apparatus according to (1) described above, further including
   a signal line that transmits a signal read from the photoelectric conversion section,
   in which the voltage control line is parallel to the signal line.
(3) The imaging apparatus according to claim 1 in (1) or (2) described above, further including
   a floating diffusion connected between the reset transistor and the transfer transistor.
(4) The imaging apparatus according to any one of (1) to (3) described above, further including:
   a first layer in which the control line is formed;
   a second layer in which the voltage control line is formed; and
   a power supply line formed in an intermediate layer between the first layer and the second layer.
(5) The imaging apparatus according to any one of (1) to (4) described above, in which
   the capacitor includes a plurality of capacitors connected to voltage control lines different from each other.
(6) The imaging apparatus according to any one of (1) to (5) described above, in which
   the capacitor has a three-dimensional metal insulation metal (MIM) structure.
(7) The imaging apparatus according to any one of (1) to (6) described above, in which
   the photoelectric conversion section includes a plurality of photoelectric conversion sections having sensitivities different from each other and connected to transfer transistors different from each other.
(8) The imaging apparatus according to any one of (1) to (7) described above, in which
   the photoelectric conversion section includes:
   a first photoelectric conversion section; and
   a second photoelectric conversion section having lower sensitivity than the first photoelectric conversion section, and
   the capacitor accumulates an electric charge overflowing from the second photoelectric conversion section.
(9) The imaging apparatus according to any one of (1) to (8) described above, further including:
   a pixel array section in which pixels each provided with the photoelectric conversion section, the transfer transistor, the reset transistor, and the capacitor are arranged in a matrix in a row direction and a column direction,
   in which the control line is wired in the row direction, and
   the voltage control line is wired in the column direction.
(10) The imaging apparatus according to (9) described above, further including
   a drive circuit that drives the voltage control line for each of columns.
(11) The imaging apparatus according to (10) described above, in which
   the drive circuit pulse-drives the voltage control line for each of the columns at the same timing.
(12) The imaging apparatus according to (11) described above, in which
   the drive circuit sets a potential of the voltage control line to a high level during a shutter period and a read period of the pixels, and sets the potential of the voltage control line to a low level during an accumulation period of the pixels.

### REFERENCE SIGNS LIST

- 100: Imaging apparatus
- 101: Optical system
- 102: Solid-state imaging apparatus
- 103: Imaging control section
- 104: Image processing section
- 105: Storage section
- 106: Display section
- 107: Operation section
- 108: Bus
- 111: Pixel array section
- 112: Vertical scanning circuit
- 113: Column readout circuit
- 114: Column signal processing section
- 115: Horizontal scanning circuit
- 116: Control circuit
- 117: Voltage control line drive circuit
- PD1: Photodiode
- 122: Transfer transistor
- 123: Reset transistor
- 124: Amplification transistor
- 125: Selection transistor
- 126: Capacitor
- 127: Pass transistor
- 128: Switching transistor
- FD: Floating diffusion
- 131: Horizontal drive line
- 132: Vertical signal line
- 133: Voltage control line

## Claims

1. An imaging apparatus comprising:
a photoelectric conversion section;
a transfer transistor connected to the photoelectric conversion section;
a reset transistor including one terminal connected to the transfer transistor and another terminal connected to a power supply voltage;
a capacitor including one terminal connected to the photoelectric conversion section and another terminal connected to a control voltage;
a voltage control line that transmits the control voltage; and
a control line that transmits a transfer signal to the transfer transistor,
wherein the voltage control line is orthogonal to the control line.

2. The imaging apparatus according to claim 1, further comprising
a signal line that transmits a signal read from the photoelectric conversion section,
wherein the voltage control line is parallel to the signal line.

3. The imaging apparatus according to claim 1, further comprising
a floating diffusion connected between the reset transistor and the transfer transistor.

4. The imaging apparatus according to claim 1, further comprising:
a first layer in which the control line is formed;
a second layer in which the voltage control line is formed; and
a power supply line formed in an intermediate layer between the first layer and the second layer.

5. The imaging apparatus according to claim 1, wherein
the capacitor includes a plurality of capacitors connected to voltage control lines different from each other.

6. The imaging apparatus according to claim 1, wherein
the capacitor has a three-dimensional metal insulation metal (MIM) structure.

7. The imaging apparatus according to claim 1, wherein
the photoelectric conversion section includes a plurality of photoelectric conversion sections having sensitivities different from each other and connected to transfer transistors different from each other.

8. The imaging apparatus according to claim 1, wherein
the photoelectric conversion section includes:
a first photoelectric conversion section; and
a second photoelectric conversion section having lower sensitivity than the first photoelectric conversion section, and
the capacitor accumulates an electric charge overflowing from the second photoelectric conversion section.

9. The imaging apparatus according to claim 1, further comprising
a pixel array section in which pixels each provided with the photoelectric conversion section, the transfer transistor, the reset transistor, and the capacitor are arranged in a matrix in a row direction and a column direction,
wherein the control line is wired in the row direction, and
the voltage control line is wired in the column direction.

10. The imaging apparatus according to claim 9, further comprising
a drive circuit that drives the voltage control line for each of columns.

11. The imaging apparatus according to claim 10, wherein
the drive circuit pulse-drives the voltage control line for each of the columns at a same timing.

12. The imaging apparatus according to claim 11, wherein
the drive circuit sets a potential of the voltage control line to a high level during a shutter period and a read period of the pixels, and sets the potential of the voltage control line to a low level during an accumulation period of the pixels.
